(19) Europäisches Patentamt
European Patent Office
Office européen des brevets

(11) **EP 2 337 293 B1**

(12) **EUROPÄISCHE PATENTSCHRIFT**

(45) Veröffentlichungstag und Bekanntmachung des Hinweises auf die Patenterteilung:
**21.11.2012 Patentblatt 2012/47**

(51) Int Cl.:
***H04L 27/26*** *(2006.01)*  ***H04L 5/00*** *(2006.01)*

(21) Anmeldenummer: **09450238.2**

(22) Anmeldetag: **15.12.2009**

(54) **Vorrichtungen, Verfahren und Signale zur OFDM-Kodierung**

Devices, methods and signals for OFDM encoding

Dispositifs, procédés et signaux de codage OFDM

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**22.06.2011 Patentblatt 2011/25**

(73) Patentinhaber:
• **Lakeside Labs GmbH**
  **9020 Klagenfurt (AT)**
• **Friedrich-Alexander-Universität Erlangen-Nürnberg**
  **91054 Erlangen (DE)**

(72) Erfinder:
• **Huber, Johannes, Prof. Dr.-Ing. Dr. habil.**
  **91054 Langensendelbach (DE)**
• **Huemer, Mario, Univ.-Prof. Dr.**
  **4072 Alkoven (AT)**
• **Hofbauer, Christian, Dipl.-Ing. (FH)**
  **4171 St. Peter am Wimberg (AT)**

(74) Vertreter: **Weiser, Andreas**
**Patentanwalt**
**Kopfgasse 7**
**1130 Wien (AT)**

(56) Entgegenhaltungen:
**EP-A2- 1 564 952    US-A1- 2006 018 250**

## Beschreibung

Die vorliegende Erfindung betrifft einen OFDM-Kodierer gemäß dem Oberbegriff des Anspruchs 1. Die Erfindung betrifft ferner ein Verfahren zur OFDM-Kodierung gemäß dem Oberbegriff des Anspruchs 8 sowie ein damit hergestelltes OFDM-Signal.

OFDM-Kodierer und -Verfahren dieser Art sind aus der US 2006/018250 A1 und der EP 1 564 952 A2 bekannt.

OFDM (Orthogonal Frequency Division Multiplexing) wird heute in einer Vielzahl digitaler Übertragungsstandards verwendet, wie DAB (Digital Audio Broadcasting) nach z.B. ETSI-Norm EN 300 401, DVB (Digital Video Broadcasting) nach z.B. ETSI-Norm EN 300 744, DSL (Highspeed Digital Subscriber Lines) nach z.B. ETSI-Norm TS 10 10 338, WLAN (Wireless Local Area Network) nach z.B. IEEE-Norm 802.11x usw. Um ein gegenseitiges Übersprechen (Inter-Symbol Interference, ISI) aufeinanderfolgender OFDM-Symbole im Falle von Mehrwegeausbreitungen, frequenzabhängigen Dämpfungen od.dgl. zu verhindern, werden Schutzintervalle ("Guard Intervals") zwischen den einzelnen OFDM-Symbolen des OFDM-Signals eingerichtet. Dazu gibt es derzeit zwei verschiedene Verfahren.

Beim sog. "Zero Padding" (ZP-OFDM) wird das Schutzintervall mit einem Nullwort gefüllt. Ein solches Nullwort kann zwar im Empfänger einfach detektiert und auch als Trainingssequenz und zu Synchronisationszwecken ausgenützt werden, doch erfordert es überaus aufwendige Verfahren wie "Overlap-Save", "Overlap-Add" od.dgl. zur Entzerrung des Übertragungskanals im Empfänger. Beim sog. "Cyclic Prefixing" (CP-OFDM) wird das Schutzintervall jeweils mit dem Endabschnitt des darauffolgenden OFDM-Symbols gefüllt. Dies erleichtert die Entzerrung linear faltender Übertragungskanäle ungemein, weil die lineare Faltung der Impulsantwort des Kanals mit dem Signal auf diese Weise durch eine zyklische Faltung über die Länge eines OFDM-Symbols im Zeitbereich modelliert werden kann. Dies entspricht im Frequenzbereich einer einfachen Multiplikation des Kanalfrequenzgangs mit dem Spektrum des OFDM-Symbols, was im Empfänger durch eine einfache Multiplikation pro Subträger mit dem inversen Kanalfrequenzgang an der entsprechenden Frequenz entzerrt werden kann. Sowohl ZP-OFDM- als auch CP-OFDM-Kodierungen verlängern überdies wegen des jeweils notwendigen Schutzintervalls den OFDM-Symbolabstand und reduzieren damit die erzielbare Datenübertragungsrate. Für eine nähere Erörterung aller Vor- und Nachteile dieser Verfahren wird auf B. Muquet et al., "Cyclic-Prefixing or Zero-Padding for Wireless Multicarrier Transmissions?", IEEE Transaction on Communications, Band 50, Nr. 12, Dezember 2002, verwiesen.

In den eingangs genannten Literaturstellen US 2006/018250 A1 und EP 1 564 952 A2 wurde daher bereits vorgeschlagen, den letzten Abschnitt jedes OFDM-Symbols im Zeitbereich mit einem vorgegebenen Datenwort ("unique word", UW) zu füllen, so daß dieser Abschnitt gleichzeitig das Schutzintervall und den Cyclic-Prefix bildet ("known CP-OFDM", "constant CP-OFDM" bzw. "UW-OFDM"). Bei den bekannten UW-OFDM-Verfahren wird zur Erzielung des UW im genannten OFDM-Symbolabschnitt das UW direkt als Iterationsziel in jene Minimierungsaufgaben eingesetzt, welche die Redundanzsymbole berechnen, die senderseitig den Datensymbolen hinzugefügt werden müssen.

Die Erfindung setzt sich zum Ziel, verbesserte Vorrichtungen, Verfahren und Signale zur OFDM-Kodierung zu schaffen, welche die Vorteile der bekannten Kodierungen ohne deren spezifische Nachteile miteinander verbinden.

Dieses Ziel wird in einem ersten Aspekt der Erfindung mit einem OFDM-Kodierer mit den Merkmalen des Anspruchs 1 erreicht.

In einem zweiten Aspekt schafft die Erfindung dazu ein Verfahren zur OFDM-Kodierung mit den Merkmalen des Anspruchs 8.

Ein dritter Aspekt der Erfindung besteht in einem OFDM-Signal, wie es von dem OFDM-Kodierer bzw. Kodierverfahren der Erfindung erzeugt wird.

Die vorgegebenen Abschnitte der OFDM-Symbole können - ähnlich dem Nullwort der ZP-OFDM - im Empfänger einfach detektiert und zum Training und zur Synchronisation des Empfängers verwendet werden. Zusätzlich kann die durch die vorgegebenen Abschnitte eingeführte Redundanz zur Minimierung der Rauschleistung auf den Subträgern, insbesondere zur Rekonstruktion stark gestörter Subträger, genutzt werden. Gleichzeitig wirken die vorgegebenen Abschnitte - weil sie Teil der OFDM-Symbole selbst sind und in jedem OFDM-Symbol gleich wiederkehren - in der Art eines Cyclic Prefix, d.h. der Endabschnitt jedes OFDM-Symbols stellt gleichsam eine "Kopie" des Endabschnitts des darauffolgenden OFDM-Symbols dar. Damit können alle Vorteile der bekannten CP-OFDM-Kodierverfahren hinsichtlich der einfachen Entzerrung linear faltender Übertragungskanäle erreicht werden, u.zw. ohne daß ein gesondertes Schutzintervall notwendig wäre, weil die vorgegebenen Endabschnitte selbst als Schutzintervalle wirken. Im Ergebnis kann der Symbolabstand reduziert und gegebenenfalls eine entsprechend höhere Datenübertragungsrate erzielt werden.

Falls gewünscht, kann jedes OFDM-Symbol auch mit mehr als einem vorgegebenen Abschnitt ausgestattet werden. Dazu werden die Redundanzsymbole so bestimmt, daß jedes OFDM-Symbol zumindest zwei voneinander beabstandete vorgegebene Abschnitte hat, von denen zumindest einer an einem Ende des OFDM-Symbols liegt. Diese Variante erfordert zwar die zusätzliche Verwendung eines Cyclic Prefix-Teils zwischen den OFDM-Symbolen, wie später noch ausführlich erläutert wird, und erhöht damit den Symbolabstand, doch stellen die zwischen den vorgegebenen Abschnitten verbleibenden Bereiche des OFDM-Symbols auch Datenbereiche dar, was einen Kompromiß zwischen der OFDM-Kodierung der vorliegenden Erfindung und der bekannten CP-OFDM-Kodierung darstellt.

Wird die Anzahl der Subträger des zweiten Teils größer oder gleich der Anzahl der Werte des OFDM-Symbols im vorgegebenen Abschnitt gewählt, so können die Werte im genannten Abschnitt exakt, d.h. ohne Fehler, erzeugt werden, u.zw. bevorzugt so, daß die spektralen Eigenschaften und Korrelationseigenschaften der Abschnitte optimal für die empfangsseitigen Schätz- und Synchronisationsaufgaben geeignet sind.

Wird anderseits die Anzahl der Subträger des zweiten Teils kleiner als die Anzahl der Werte des OFDM-Symbols im vorgegebenen Abschnitt gewählt, dann ergeben sich zwar geringe Fehler in den einzelnen Werten des genannten Abschnitts gegenüber den Vorgaben, doch können diese Fehler als weitere Freiheitsgrade bei der Bestimmung der Redundanzsymbole herangezogen werden. Dadurch kann eine zusätzliche Verringerung der Energie der Redundanzsymbole und insbesondere ein Kompromiß zwischen der zugelassenen Fehlerenergie im vorgegebenen Abschnitt und der Verringerung der Signalenergie auf den Subträgern des zweiten Teils im Hinblick auf eine Optimierung der Systemleistung - gemessen in Bitfehlerrate, Paketfehlerrate bzw. Datendurchsatz - erreicht werden.

Besonders vorteilhaft ist es, wenn die Redundanzsymbole im Hinblick auf eine Minimierung eines Maßes ihrer eigenen Signalenergie bestimmt werden. Dadurch kann eine übermäßige Signalleistung, welche Sende- und Empfangssysteme beeinträchtigen könnte, vermieden werden.

Insbesondere wenn Fehler in den vorgegebenen Abschnitten zugelassen werden und so weitere Freiheitsgrade verfügbar sind, werden bevorzugt die Redundanzsymbole auch im Hinblick auf eine Minimierung eines Maßes der Signalenergie jedes vorgegebenen Abschnitts bestimmt.

Weitere Möglichkeiten zur Minimierung der Signalenergie der Redundanzsymbole bestehen im Zulassen eines Fehlers auf den Trägern der Datensymbole und/oder auf den Nullträgern.

Demgemäß besteht eine weitere bevorzugte Ausführungsform der Erfindung darin, daß die Redundanzsymbole des zweiten Teils im Hinblick auf eine Minimierung einer Kostenfunktion bestimmt werden, welche sich aus einem Maß ihrer eigenen Signalenergie und einem oder mehreren der folgenden Elemente zusammensetzt:

- einem Maß von Fehlern der Abtastwerte des Abschnitts gegenüber seinen Vorgabewerten;
- einem Maß von Abweichungen der Abtastwerte des ersten Teils gegenüber den Werten des Datensymbols;
- einem Maß von Abweichungen der Abtastwerte eines dritten Teiles des Subträgersatzes gegenüber festen Vorgabewerten desselben.

Die Teile bzw. Subträgerpositionen des Subträgersatzes, welche für die Datensymbole einerseits und Redundanzsymbole anderseits verwendet werden, können an sich beliebig gewählt werden und stellen einen weiteren bei den oben genannten Minimierungen ausnützbaren Freiheitsgrad dar. Durch heuristische Optimierungsansätze wurde gefunden, daß die Subträger des zweiten Teils bevorzugt etwa äquidistant über den gesamten Subträgersatz verteilt werden, um minimale Signalenergien zu erreichen.

Eine weitere bevorzugte Ausgestaltung der Erfindung besteht darin, daß die Redundanzsymbole annähernd einem diskreten Wertegitter unter Minimierung der Abweichungen zu diesem entnommen werden. Aus der Bekanntheit des Wertegitters im Empfänger bzw. Dekodierer können weitere Rückschlüsse über den Kanal gezogen und/oder zusätzliche Fehlererkennungen bzw. -korrekturen vorgenommen werden.

Die Erfindung wird nachstehend anhand von in den beigeschlossenen Zeichnungen dargestellten Ausführungsbeispielen näher erläutert. In den Zeichnungen zeigt

Fig. 1 das Zeitbereichssignal einer ZP-OFDM-Kodierung nach dem Stand der Technik;
Fig. 2 das Zeitbereichssignal einer CP-OFDM-Kodierung nach dem Stand der Technik;
Fig. 3 das Zeitbereichssignal einer OFDM-Kodierung gemäß der Erfindung;
Fig. 4 ein Blockschaltbild eines OFDM-Kodierers gemäß der Erfindung; und
Fig. 5 das Zeitbereichssignal einer alternativen Ausführungsform der OFDM-Kodierung der Erfindung.

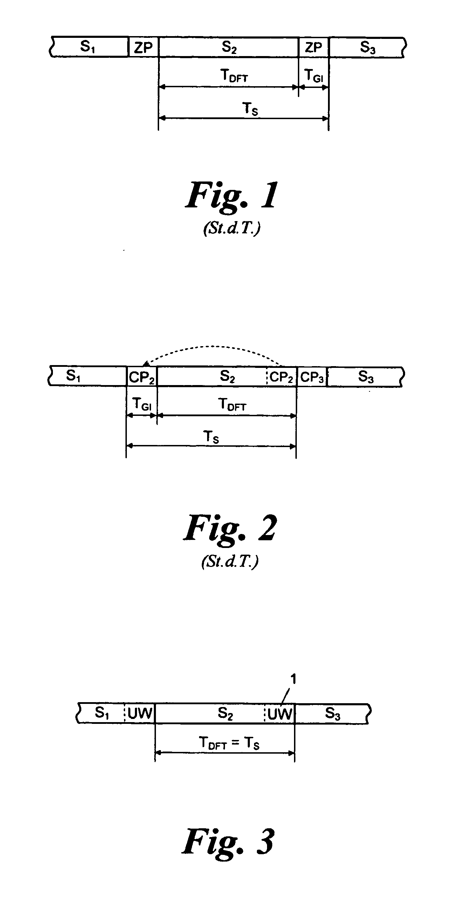

In Fig. 1 ist das Zeitbereichssignal einer ZP-OFDM-Kodierung nach dem Stand der Technik dargestellt. Aufeinanderfolgende OFDM-Symbole $S_1$, $S_2$, $S_3$... (allgemein $S_i$) der Länge $T_{DFT}$ sind jeweils durch ein Nullwort ZP der Länge $T_{GI}$ voneinander getrennt, welches das Schutzintervall ("Guard Interval") bildet bzw. ausfüllt. Der die Datenübertragungsrate mitbestimmende Symbolabstand $T_S$ ist gleich $T_{DFT} + T_{GI}$.

Fig. 2 zeigt das Zeitbereichssignal einer CP-OFDM-Kodierung nach dem Stand der Technik. Die Schutzintervalle zwischen den OFDM-Symbolen $S_i$ sind hier jeweils mit einem Cyclic-Prefix $CP_i$ gefüllt, welches eine Kopie des Endabschnittes des darauffolgenden OFDM-Symbols $S_i$ enthält. Die lineare Faltung des Signals mit der Impulsantwort eines linear faltenden Übertragungskanals, welche ein "Hineinfalten" des jeweiligen Cyclic-Prefix $CP_i$ in das darauffolgende OFDM-Symbol $S_i$ zur Folge hat, kann somit als zyklische Faltung innerhalb der Symbollänge $T_{DFT}$ des OFDM-Symbols $S_i$ aufgefaßt werden, welche im Frequenzbereich eine einfache Entzerrung des Kanals durch Multiplikation mit dem inversen Kanalfrequenzgang ermöglicht, wie dem Fachmann bekannt. Bei der CP-OFDM-Kodierung beträgt der Symbolabstand $T_S = T_{DFT} + T_{GI}$.

Fig. 3 zeigt demgegenüber den Zeitbereichsaufbau des OFDM-Signals der Erfindung. Die einzelnen OFDM-Symbole $S_i$, deren Erzeugung später noch im Detail erörtert wird, folgen hier unmittelbar aufeinander, so daß der gesamte Symbolabstand $T_S$ gleich der OFDM-Symbollänge $T_{DFT}$ ist, d.h. $T_S = T_{DFT}$. Ein gesondertes Schutzintervall entfällt.

Jeweils ein Endabschnitt 1 jedes OFDM-Symbols $S_i$ hat einen bekannten vorgegebenen Verlauf, z.B. ist mit einem Nullwort oder jedem anderen beliebigen Wort ("Unique Word") $UW$ gefüllt. Dadurch bildet der Abschnitt 1 jedes Symbols $S_i$ gleichsam ein Cyclic-Prefix für das darauffolgende Symbol $S_{i+1}$, so daß die lineare Faltung des Signals mit der Impulsantwort eines linear faltenden Übertragungskanals wieder als zyklische Faltung innerhalb der Symbollänge $T_{DFT}$ modelliert werden kann, was die genannten Vorteile einer einfachen Entzerrung des Kanals im Frequenzbereich ähnlich der CP-OFDM von Fig. 2 bietet. Gleichzeitig kann der Abschnitt 1 als vorbekannte Sequenz zu Trainings-, Kanalschätzungs- und Synchronisierungsfunktionen ausgenützt werden, ähnlich der ZP-OFDM von Fig. 1.

Im Vergleich sowohl zur ZP-OFDM als auch zur CP-OFDM ergibt sich ein signifikant verkürzter Symbolabstand $T_S$. Die zusätzliche Redundanz, welche durch die Abschnitte 1 in das OFDM-Signal eingebracht wird und einerseits zu Lasten der Nutzdaten in den OFDM-Symbolen geht, vermindert andererseits die Anforderungen an zusätzliche Kanalkodierungsverfahren, wie sie derzeit bei den bekannten digitalen Übertragungsstandards wie DAB, DVB, WLAN, DSL usw. in darüberliegenden Schichten des Übertragungsprotokolls verwendet werden. Insgesamt kann mit dem OFDM-Signalformat der vorliegenden Erfindung eine höhere Datenübertragungsrate bei gleicher Fehlerrate bzw. eine geringere Fehlerrate bei gleicher Datenübertragungsrate erreicht werden.

Es ist grundsätzlich ohne Belang, ob der Abschnitt 1 jeweils am hinteren oder vorderen Ende der OFDM-Symbole $S_i$ liegt; es versteht sich, daß zur Dekodierung des gesamten OFDM-Signals, d.h. der gesamten Folge aller OFDM-Symbolen $S_i$, im ersten Fall dem ersten Symbol der Folge ein zusätzlicher Abschnitt 1 vorangestellt bzw. im zweiten Fall dem letzten Symbol der Folge ein zusätzlicher Abschnitt 1 nachgestellt werden sollte, wenn die genannte Zyklizität für alle Symbole, d.h. auch die Randsymbole der Folge, ausgenützt werden soll.

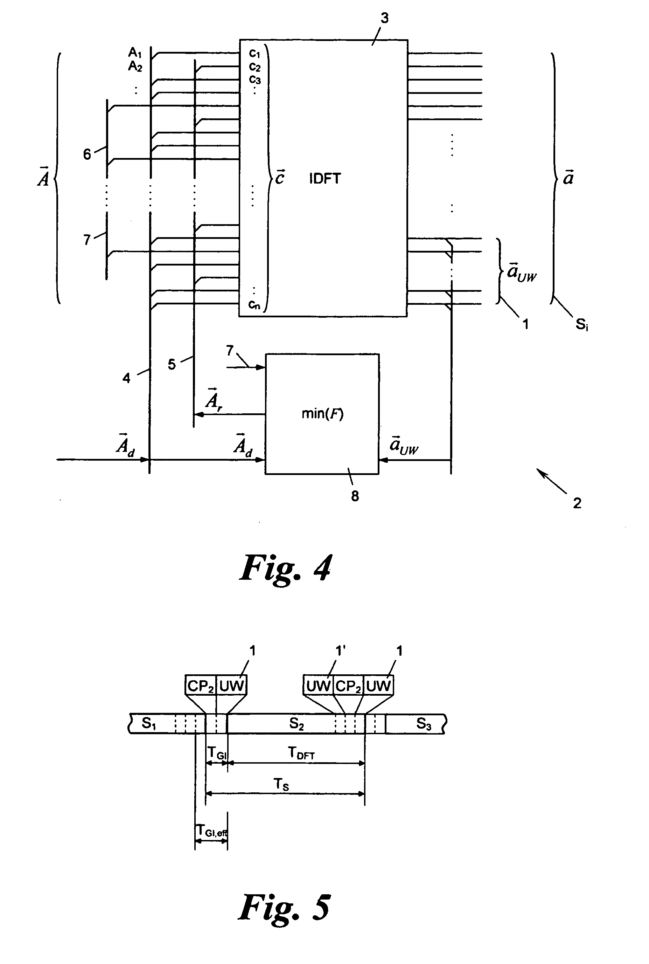

Fig. 4 zeigt schematisch einen OFDM-Kodierer 2 zur Erzeugung des OFDM-Signals von Fig. 3. Der OFDM-Kodierer 2 umfaßt in an sich bekannter Weise ein Glied 3 zur Inversen Diskreten Fourier-Transformation (IDFT), bevorzugt implementiert durch eine Inverse Schnelle Fourier-Transformation (IFFT). Das IDFT-Glied 3 moduliert einen Eingangs-Symbolvektor $\overleftarrow{A}$ im Frequenzbereich, umfassend $n$ Subträgeramplituden $A_1$, $A_2$..., auf einen Satz $\overleftarrow{C}$ von $n$ orthogonalen Subträgerfrequenzen, kurz Subträgern, $C_1$, $C_2$,..., welche gemeinsam einen Ausgangsvektor $\overleftarrow{a}$ im Zeitbereich bilden, der ein OFDM-Symbol $S_i$ darstellt.

Zur Kodierung von Eingangs-Datensymbolen $\overleftarrow{A}_d$ wird lediglich ein Teil 4 des Subträgersatzes $\overleftarrow{C}$ verwendet. Ein zweiter Teil 5 des Subträgersatzes $\overleftarrow{C}$ wird mit einem hier als "Redundanzsymbol" bezeichneten Vektor $\overleftarrow{A}_r$ moduliert. Die Redundanzsymbole $\overleftarrow{A}_r$ werden von einer Einrichtung 8 für jedes Datensymbol $\overleftarrow{A}_d$ so bestimmt bzw. festgelegt, daß im Ausgangsvektor $\overleftarrow{a}$ des IDFT-Glieds 3 ein Abschnitt $\overleftarrow{a}_{UW}$ entsteht, der den vorgegebenen Abschnitt 1 des OFDM-Symbols $S_i$ bildet, wie anschließend noch im Detail erläutert wird. Ein dritter Teil 6 des Subträgersatzes $C$ wird in herkömmlicher Weise mit Nullen belegt. Ein (optionaler) vierter Teil 7 des Subträgersatzes $\overleftarrow{C}$ wird gegebenenfalls mit Pilotdaten belegt.

In einer beispielhaften Ausführungsform ähnlich dem Standard IEEE 802.11a mit insgesamt 64 Subträgern umfaßt der erste Teil 4 eine Anzahl von 32 bis 44 Subträgern, der zweite Teil 5 eine Anzahl von 8 bis 20 Subträgern und der dritte Teil 6 eine Anzahl von 12 Null-Subträgern für ein OFDM-Symbol $\overleftarrow{a}$ bzw. $S_i$ mit 64 Elementen bzw. Abtastwerten (Samples) im Zeitbereich und einem Abschnitt 1 bzw. $\overleftarrow{a}_{UW}$ mit einer Länge von 16 Elementen bzw. Samples.

Die Funktionen, welche die Einrichtung 8 bei der Bestimmung der Redundanzsymbole $\overleftarrow{A}_r$ in Abhängigkeit von den Datensymbolen $\overleftarrow{A}_d$ ausführt, werden nun im Detail erläutert.

Mit einer Elementlänge n von $\overleftarrow{A}$ und $\overleftarrow{a}$, d.h. einer Transformationslänge des IDFT-Glieds 3 von $n$, einer Elementlänge $k$ von $\overleftarrow{A}_d$, d.h. einer Anzahl $k$ von Subträgern im Teil 4, einer Anzahl $m$ von Subträgern im Teil 6, einer Anzahl $p$ von Subträgern im Teil 7 und einer Elementlänge $l$ von $\overleftarrow{a}_{UW}$, d.h. einer Anzahl $l$ von Abtastwerten im Abschnitt 1, und der Diskreten Fourier-Transformation

$$A_\mu = \sum_{i=0}^{n-1} a_i \omega^{i\mu} \text{ mit } \omega = e^{-j2\pi/n}$$

bzw. der Inversen Diskreten Fourier-Transformation

$$a_i = \frac{1}{n} \sum_{\mu=0}^{n-1} A_\mu \omega^{-i\mu}$$

ergibt sich ein (für $l < (n\text{-}k\text{-}m\text{-}p)$ unterbestimmtes) lineares Gleichungssystem von $l$ Gleichungen für die $n\text{-}k\text{-}m\text{-}p$ redundanten Spektralkomponenten

$$A_{r_\kappa}; \quad \kappa = 1, 2, ..., n - k - m - p.$$

Hier bezeichnet $r_\kappa$ einen Indexvektor der Länge $n\text{-}k\text{-}m\text{-}p$, der die Positionen der Subträger des zweiten Teils 5 beinhaltet. Mit den Datensymbolen

$$A_{d_\kappa}; \quad \kappa = 1, 2, ..., k ,$$

wobei $d_\kappa$ einen Indexvektor der Länge $k$ bezeichnet, der die Positionen der Subträger des ersten Teils 4 beinhaltet, und den Pilotsymbolen

$$A_{p_\kappa}; \quad \kappa = 1, 2, ..., p ,$$

wobei $p_\kappa$ einen Indexvektor der Länge $p$ bezeichnet, der die Positionen der Subträger des vierten Teils 7 beinhaltet, lautet dieses Gleichungssystem für $i = n\text{-}l,...,n\text{-}1$ wie folgt:

$$\sum_{\kappa=1}^{n-k-m-p} A_{r_\kappa} \omega^{-r_\kappa i} + \sum_{\kappa=1}^{k} A_{d_\kappa} \omega^{-d_\kappa i} + \sum_{\kappa=1}^{p} A_{p_\kappa} \omega^{-p_\kappa i} = a_{UW,i}.$$

Läßt man zusätzlich Fehler $E_i$ ($i = n\text{-}l,...,n\text{-}1$) auf den Abtastwerten des Abschnitts 1 im Zeitbereich sowie Abweichungen $\Delta A_{d_\kappa}$ auf den Datensymbolen und Abweichungen von den Nullsymbolen

$$\Delta A_{q_\kappa}; \quad \kappa = 1, 2, ..., m$$

im Frequenzbereich zu, wobei $q_\kappa$ einen Indexvektor der Länge m bezeichnet, der die Positionen der Subträger des dritten Teils 6 beinhaltet, so lautet dieses Gleichungssystem wie folgt:

$$\sum_{\kappa=1}^{n-k-m-p} A_{r_\kappa} \omega^{-r_\kappa i} + \sum_{\kappa=1}^{k} (A_{d_\kappa} + \Delta A_{d_\kappa}) \omega^{-d_\kappa i} + \sum_{\kappa=1}^{p} A_{p_\kappa} \omega^{-p_\kappa i} + \sum_{\kappa=1}^{m} \Delta A_{q_\kappa} \omega^{-q_\kappa i} = a_{UW,i} + E_i$$

für $i = n\text{-}l,...,\text{n-}1$

Für den Fall, daß für den Abschnitt 1 das Nullwort gewählt wird, gilt jeweils $a_{UW,i} = 0$.

Dieses Gleichungssystem wird von der Einrichtung 8 dahingehend gelöst, daß eine auf verschiedene Arten zusammenstellbare Kostenfunktion F minimiert wird. F wird insbesondere als Summe über Subkostenfunktionen $F_1$, $F_2$, $F_3$, $F_4$, und $F_5$ - oder über die Summe von Elementen einer Teilmenge von $\{F_1, F_2, F_3, F_4, F_5\}$ - gebildet, wobei

    1. $F_1$ als

$$F_1 := \sum_{\kappa=1}^{n-k-m-p} \left| w_{1,\kappa} \cdot A_{r_\kappa} \right|^2$$

definiert ist (für $w_{1,\kappa} = 1$ entspricht dies der Energie im Redundanzsymbol $\overleftarrow{A}_r$, d.h. auf den redundanten Subträgern der Positionen $r_\kappa$),

2. $F_2$ als

$$F_2 := \sum_{i=n-l}^{n-1} \left| w_{2,i} \cdot E_i \right|^2$$

definiert ist (für $w_{2,i} = 1$ entspricht dies der Fehlerenergie im Abschnitt 1),

3. $F_3$ als

$$F_3 := \sum_{\kappa=1}^{k} \left| w_{3,\kappa} \cdot \Delta A_{d_\kappa} \right|^2$$

definiert ist (für $w_{3,\kappa} = 1$ entspricht dies der Fehlerenergie auf den Datensubträgern),

4. $F_4$ als

$$F_4 := \sum_{\kappa=1}^{m} \left| w_{4,\kappa} \cdot \Delta A_{q_\kappa} \right|^2$$

definiert ist (für $w_{4,\kappa} = 1$ entspricht dies der Fehlerenergie auf den Nullsubträgern), und

5. $F_5$ als

$$F_5 := \sum_{\kappa=1}^{n-k-m-p} \left| w_{5,\kappa} \cdot \delta_{r_\kappa} \right|^2$$

definiert ist, wenn die einzelnen Elemente $A_{r_\kappa}$ (bzw. eine Teilmenge dieser) eines Redundanzsymbols $\overleftarrow{A}_r$ unter kleinstmöglichem Fehler $F_5$ einem diskreten Wertegitter, z.B. den ungeraden ganzen komplexen Zahlen

$$A_{r_\kappa} + \delta_{r_\kappa} \in \left\{ \alpha(m + jp) \middle| m, p \in \mathbb{Z}, \alpha \in \mathbb{R} \right\}$$

entnommen werden.

Beispiel 1

In einem ersten Ausführungsbeispiel wird

$$F = F_1$$

$$\Delta A_{d_\kappa} = 0$$

$$E_i = 0$$

$$\Delta A_{q_\kappa} = 0$$

$$n - m - k - p \geq l$$

gewählt, d.h. daß $F=F_1$ minimiert wird, kein Fehler $\Delta A_{d_\kappa}$ auf den Datensymbolen $A_{d_\kappa}$, kein Fehler $E_i$ auf dem Unique Word $a_{UW,i}$ und kein Fehler $\Delta A_{q_\kappa}$ auf den Nullsubträgern zugelassen wird. Ferner wird für die Redundanzsymbole kein diskretes Wertegitter vorgegeben. Die Anzahl der Subträger des zweiten Teils *(n-k-m-p)* kann dabei größer oder gleich der Anzahl *l* der Werte des OFDM-Symbols im vorgegebenen Abschnitt gewählt werden. Die Positionen $r_\kappa$, an denen die redundanten Frequenzkomponenten einzusetzen sind, sind so zu wählen, daß sich im Mittel über alle möglichen zu übertragenden Datenvektoren der kleinste Gesamtwert F ergibt.

Beispiel 2

In einem zweiten Ausführungsbeispiel wird

$$F = F_1 + F_2$$

$$\Delta A_{d_\kappa} = 0$$

$$\Delta A_{q_\kappa} = 0$$

gewählt, d.h. daß im Gegensatz zum ersten Ausführungsbeispiel Fehler $E_i$ auf den Abtastwerten des Abschnitts 1, jedoch unter Minimierung von *F*, erlaubt sind. Die Anzahl der Subträger des zweiten Teils (*n-k-m-p*) kann wie beim ersten Beispiel größer oder gleich, nun aber auch kleiner als die Anzahl *l* der Werte des OFDM-Symbols im vorgegebenen Abschnitt gewählt werden. Es ist somit eine Erhöhung der Datenrate möglich. Die Positionen $r_\kappa$, an denen die redundanten Frequenzkomponenten einzusetzen sind, sind so zu wählen, daß sich im Mittel über alle möglichen zu übertragenden Datenvektoren der kleinste Gesamtwert *F* oder nur der kleinste Wert $F_1$ ergibt.

Beispiel 3

In einem dritten Ausführungsbeispiel wird

$$F = F_1 + F_3$$

$$E_i = 0$$

$$\Delta A_{q_\kappa} = 0$$

gewählt, d.h. daß im Gegensatz zum ersten Ausführungsbeispiel Fehler $\Delta A_{d_\kappa}$ auf den Datensymbolen, jedoch unter Minimierung von *F*, erlaubt sind. Die Anzahl der Subträger des zweiten Teils (*n-k-m-p*) kann wie in der zweiten Ausführungsform größer oder gleich, aber auch kleiner als die Anzahl *l* der Werte des OFDM-Symbols im vorgegebenen Abschnitt gewählt werden. Die Positionen $r_\kappa$, an denen die redundanten Frequenzkomponenten einzusetzen sind, sind so zu wählen, daß sich im Mittel über alle möglichen zu übertragenden Datenvektoren der kleinste Gesamtwert *F* oder nur der kleinste Wert $F_1$ ergibt.

Beispiel 4

In einem vierten Ausführungsbeispiel wird

$$F = F_1 + F_2 + F_3$$

$$\Delta A_{q_\kappa} = 0$$

gewählt, d.h. daß im Gegensatz zum ersten Ausführungsbeispiel Fehler $\Delta A_{d_\kappa}$ auf den Datensymbolen und Fehler $E_i$ auf den Abtastwerten des Unique Words $a_{UW,i}$, jedoch unter Minimierung von $F$, erlaubt sind. Die Anzahl der Subträger des zweiten Teils (n-k-m-p) kann wie im ersten und zweiten Beispiel größer oder gleich, aber auch kleiner als die Anzahl 1 der Werte des OFDM-Symbols im vorgegebenen Abschnitt gewählt werden. Die Positionen $r_\kappa$, an denen die redundanten Frequenzkomponenten einzusetzen sind, sind so zu wählen, daß sich im Mittel über alle möglichen zu übertragenden Datenvektoren der kleinste Gesamtwert $F$ oder nur der kleinste Wert $F_1$ ergibt.

Beispiel 5

In einem fünften Ausführungsbeispiel wird die Funktion $F_4$ mit der Gesamtfunktion $F$ des ersten oder des zweiten oder des dritten oder des vierten Ausführungsbeispiels kombiniert. D.h. es wird

$$F = F_1 + F_4 \vee F = F_1 + F_2 + F_4 \vee F = F_1 + F_3 + F_4 \vee F = F_1 + F_2 + F_3 + F_4$$

gewählt, wobei die entsprechend gewählte Funktion F minimiert und ein Fehler $\Delta A_{q_\kappa}$ auf den Nullsubträgern zugelassen wird. In Abhängigkeit der gewählten Funktion $F$ wird ein bzw. kein Fehler $E_i$, $\Delta A_{d_\kappa}$ zugelassen. Die Positionen $r_\kappa$, an denen die redundanten Frequenzkomponenten einzusetzen sind, sind so zu wählen, daß sich im Mittel über alle möglichen zu übertragenden Datenvektoren der kleinste Gesamtwert F oder der kleinste Wert $F_1$ ergibt.

Beispiel 6

In einem sechsten Ausführungsbeispiel wird die Funktion $F_5$ mit der Gesamtfunktion $F$ des ersten oder des zweiten oder des dritten oder des vierten oder des fünften Ausführungsbeispiels kombiniert. D.h., es wird

$$F = F_1 + F_5 \vee F = F_1 + F_2 + F_5 \vee F = F_1 + F_3 + F_5 \vee F = F_1 + F_2 + F_3 + F_5$$

$$F = F_1 + F_4 + F_5 \vee F = F_1 + F_2 + F_4 + F_5 \vee F = F_1 + F_3 + F_4 + F_5 \vee F = F_1 + F_2 + F_3 + F_4 + F_5$$

gewählt, wobei die einzelnen Elemente $A_{r_\kappa}$ (bzw. eine Teilmenge dieser) eines Redundanzsymbols $\vec{A}_r$ unter kleinstmöglichem Fehler $F_5$ einem diskreten Wertegitter entnommen werden. In Abhängigkeit der gewählten Funktion $F$ wird ein bzw. kein Fehler $E_i$, $\Delta A_{d_\kappa}$, $\Delta A_{q_\kappa}$ zugelassen. Die Positionen $r_\kappa$, an denen die redundanten Frequenzkomponenten einzusetzen sind, sind so zu wählen, daß sich im Mittel über alle möglichen zu übertragenden Datenvektoren der kleinste Gesamtwert $F$ oder der kleinste Wert $F_1$ ergibt.

Alle in den obenstehenden Beispielen genannten Optimierungsprobleme können jeweils mit Hilfe wohlbekannter Methoden gelöst werden. Z.B. lautet in dem zweiten Ausführungsbeispiel der Zulassung eines Fehlers $E_i$ unter

Minimierung von *F* das zu lösende Gleichungssystem

$$\sum_{\kappa=1}^{n-k-m-p} A_{r_\kappa} \omega^{-r_\kappa i} + \sum_{\kappa=1}^{k} A_{d_\kappa} \omega^{-d_\kappa i} + \sum_{\kappa=1}^{p} A_{p_\kappa} \omega^{-p_\kappa i} = a_{UW,j} + E_i \; .$$

Mit den Indexvektoren $r_\kappa$, $d_\kappa$, $p_\kappa$ und

$$M_1 = (\omega^{-r_\kappa i})_{i,\kappa} ; M_2 = (\omega^{-d_\kappa i})_{i,\kappa} ; M_3 = (\omega^{-p_\kappa i})_{i,\kappa} ;$$

$$\vec{A}_r = (A_{r_\kappa}); \vec{A}_d = (A_{d_\kappa}); \vec{A}_p = (A_{p_\kappa}); \vec{E} = (E_i); \vec{a}_{uw} = (a_{uw,i}),$$

wobei $M_1$ eine Matrix der Dimension *l* x *(n-m-k-p)*, $M_2$ eine Matrix der Dimension *l* x *k*, $M_3$ eine Matrix der Dimension *l* x *p*, $\vec{A}_r$ einen Vektor der Dimension *(n-m-k-p)* x *1*, $\vec{A}_d$ einen Vektor der *Dimension k x 1*, $\vec{A}_p$ einen Vektor der Dimension *p x 1* und $\vec{E}$ einen Vektor der Dimension *l x 1* bezeichnet, kann das Gleichungssystem in Matrixschreibweise als

$$M_1\vec{A}_r + M_2\vec{A}_d + M_3\vec{A}_p = \vec{a}_{uw} + \vec{E}$$

$$\vec{E} - M_1\vec{A}_r = M_2\vec{A}_d + M_3\vec{A}_p - \vec{a}_{uw}$$

$$\begin{bmatrix} -M_1 & I \end{bmatrix} \cdot \begin{bmatrix} \vec{A}_r \\ \vec{E} \end{bmatrix} = M_2\vec{A}_d + M_3\vec{A}_p - \vec{a}_{uw}$$

formuliert werden. Mit den Abkürzungen

$$W = \text{diag}\{ w_{1,1},...,w_{1,(n-k-m-p)}, w_{2,n-l},...,w_{2,n-1} \}$$

$$A = \begin{bmatrix} -M_1 & I \end{bmatrix}; \vec{x} = \begin{bmatrix} \vec{A}_r \\ \vec{E} \end{bmatrix}; \vec{b} = M_2\vec{A}_d + M_3\vec{A}_p - \vec{a}_{uw}$$

kann die Optimierungsaufgabe formuliert werden zu:

$$\min \|W\vec{x}\|_2^2 \; s.t. \; A\vec{x} = \vec{b},$$

Dieses Problem kann z.B. in bekannter Weise mit Hilfe der Lagrange'schen-Multiplikatormethode gelöst werden.

Die Gewichtsfaktoren $w_{i,j}$ sind hierzu so zu wählen, daß die Gesamtperformance des Systems hinsichtlich der üblichen Leistungsparameter optimiert wird. Die optimalen Gewichtsfaktoren werden über die Mittelung über verschiedene (repräsentative) Kanalrealisierungen ermittelt. Übliche Leistungsparameter sind etwa Bitfehlerrate oder Paketfehlerrate oder Durchsatz oder Error Vector Magnitude oder Sidelobe Suppression im Spektrum des Sendesignals.

Nach dem Empfang eines OFDM-Symbols und dessen diskreter Fourier-Transformation und der üblichen Zero-Forcing Entzerrung (Multiplikation der Subträger mit dem inversen geschätzten Kanalfrequenzgang) sowie gegebenenfalls der Subtraktion des Spektrums des Abschnitts 1 (dieser Schritt ist nur erforderlich, wenn ein Unique Word sendeseitig im Nachhinein auf einen Nullwort-Abschnitt 1 aufaddiert wurde) kann nun durch Ausnutzung der im Zuge der Bestimmung der Redundanzsymbole sendeseitig eingebrachten Korrelation unter den Subträgern die Rauschleistung auf den Subträgern minimiert werden.

Ein hinsichtlich Komplexität vernünftig realisierbarer Ansatz ist durch die so genannte LMMSE (Linear Minimum Mean Square Error)-Schätzmethode gegeben. Die nach der diskreten Fourier-Transformation und Zero-Forcing-Entzerrung erhaltenen Frequenzwerte können zusammengefaßt im Vektor $\widetilde{\vec{A}}$ wie folgt formuliert werden:

$$\widetilde{\vec{A}} = Q_1\vec{A}_d + Q_2\vec{a}_{uw} + Q_3\vec{A}_p + \vec{n}.$$

Hier bezeichnet $\widetilde{\vec{A}}$ einen (n-m-p) x 1 Vektor, $\vec{A}_d$ den k x 1 Datenvektor, $\vec{a}_{uw}$ den l x 1 Unique Word Vektor, $\vec{A}_p$ den p x 1 Pilotenvektor, $\vec{n}$ einen (n-m-p) x 1 Vektor von Rauschwerten, $Q_1$ eine (n-m-p) x k Matrix, $Q_2$ eine (n-m-p) x l Matrix, und $Q_3$ eine (n-m-p) x p Matrix, wobei sich diese Matrizen aus den oben beschriebenen Optimierungen im Sender berechnen. Der LMMSE-Schätzer für den Teil 4, also den Datenteil des OFDM-Symbols, ist im Falle einer Optimierung im Sender nach dem ersten, zweiten, dritten, vierten oder fünften Ausführungsbeispiel gegeben durch

$$\hat{\vec{A}}_d = E(\vec{A}_d) + C_{\vec{A}_d\vec{A}_d} \cdot Q_1^H \cdot (Q_1 \cdot C_{\vec{A}_d\vec{A}_d} Q_1^H + C_{\vec{n},\vec{n}})^{-1}(\widetilde{\vec{A}} - Q_2\vec{a}_{uw} - Q_3\vec{A}_p - Q_1 E(\vec{A}_d)).$$

Hier bezeichnen $C_{\vec{A}_d\vec{A}_d}$ und $C_{\vec{n},\vec{n}}$ die Kovarianzmatrizen der Daten- bzw. Rauschvektoren, $\vec{A}_d$ bezeichnet den Vektor der geschätzten Datensymbole, das Superskript $^H$ bezeichnet die hermitesche Transposition (vgl. Steven M. Kay, "Fundamentals of Statistical Signal Processing, Vol. 1: Estimation Theory", Prentice Hall, Upper Saddle River, NJ 07458, 1993, S. 391). Die Qualität des Schätzers wird durch den Fehler $\varepsilon = \vec{A}_d - \hat{\vec{A}}_d$ charakterisiert und kann mit Hilfe der Kovarianzmatrix

$$C_\varepsilon = C_{\vec{A}_d\vec{A}_d} - C_{\vec{A}_d\vec{A}_d} \cdot Q_1^H (Q_1 \cdot C_{\vec{A}_d\vec{A}_d} \cdot Q_1^H + C_{\vec{n},\vec{n}})^{-1} \cdot Q_1 \cdot C_{\vec{A}_d\vec{A}_d}$$

in weiteren Dekodierungsschritten wie etwa der Kanaldekodierung berücksichtigt werden. Es sei erwähnt, daß der Schritt der ZF-Entzerrung auch einfach in den LMMSE-Schätzer inkludiert werden kann.

Fig. 5 zeigt das aus einer Folge von OFDM-Symbolen $S_i$ zusammengesetzte OFDM-Signal einer alternativen Ausführungsform der Erfindung im Zeitbereich. Bei dieser Ausführungsform umfaßt jedes OFDM-Symbol $S_i$ mehr als einen Abschnitt 1 mit vorgegebenem Verlauf, hier zwei Abschnitte 1, 1'. Um linear faltende Übertragungskanäle mit einer zyklischen Faltung innerhalb der Symbollänge $T_{DFT}$ (der Länge der Diskreten Inversen Fourier-Transformation) zu modellieren, werden hier zusätzlich Schutzintervalle $T_{GI}$ eingeführt, welche mit dem Endabschnitt 1 des darauffolgenden OFDM-Symbols $S_i$ sowie einer Kopie des zwischen den Abschnitten 1' und 1 liegenden Bereichs als Cyclic-Prefix $CP_2$ gefüllt werden. Der Symbolabstand beträgt hier wieder $T_S = T_{DFT} + T_{GI}$, es ist jedoch zu beachten, daß das hier erforderliche Schutzintervall $T_{GI}$ kürzer ist als jenes der CP-OFDM von Fig. 2, und zwar um die Länge des Abschnitts 1'. Dennoch ergibt sich ein *effektives* ISI-Schutzintervall $T_{GI,eff}$ der gesamten Länge aus Abschnitt 1', Cyclic-Prefix $CP_i$ und Abschnitt 1, weil jeweils der Endabschnitt 1 des vorhergehenden OFDM-Symbols $S_i$ mitausgenützt werden kann.

Somit erlaubt dieser Ansatz einerseits die Nutzung der Vorteile der OFDM-Kodierung der Fig. 3 und 4 und andererseits eine zusätzliche Erhöhung der Datenrate auf Grund des Cyclic Prefix.

Der bzw. die Abschnitte 1, 1' der OFDM-Symbole $S_i$ können einen beliebigen vorgegebenen Verlauf haben, z.B. ein beliebiges, vom Nullwort verschiedenes "Unique Word" UW enthalten. Letzteres kann etwa durch Aufaddieren eines beliebigen Datenworts auf das bei der Minimierung von $F_1$ (näherungsweise) erreichte Nullwort erzielt werden. Da die diskrete Fourier-Transformation linear ist, gilt eine solche lineare Superposition auch im Frequenzbereich. Da im Empfänger das UW und damit dessen Spektrum bekannt ist, kann ein von Null verschiedenes Datenwort vom OFDM-Symbol nach der diskreten Fourier-Transformation im Empfänger subtrahiert werden. Bei linear dispersiven, d.h. frequenzselektiven Übertragungskanälen ist hierzu die Kenntnis des diskreten Kanalfrequenzgangs notwendig.

Die Erfindung ist nicht auf die dargestellten Ausführungsbeispiele beschränkt, sondern umfaßt alle Varianten, Kombinationen und Modifikationen, die in den Rahmen der angeschlossenen Ansprüche fallen.

**Patentansprüche**

1. OFDM-Kodierer (2), mit einem IDFT-Glied (3) zur Modulation von Datensymbolen ($\vec{A}_d$) auf einen ersten Teil (4) und von Redundanzsymbolen ($\vec{A}_r$) auf einen zweiten Teil (5) eines Satzes ($\vec{C}$) von orthogonalen Subträgern ($c_i$) im Frequenzbereich, die gemeinsam OFDM-Symbole ($S_i$, $\vec{a}$) im Zeitbereich bilden, und Mitteln (8) zur Bestimmung der Redundanzsymbole ($\vec{A}_r$) in Abhängigkeit von den Datensymbolen ($\vec{A}_d$) derart, daß jedes OFDM-Symbol ($S_i$, $\vec{a}$) zumindest einen von Null verschiedenen vorgegebenen Abschnitt (1, 1', $\vec{a}_{uw}$) hat, welcher an einem Ende des OFDM-Symbols ($S_i$, $\vec{a}$) liegt, **dadurch gekennzeichnet,**
   **daß** die Mittel (8) dafür ausgebildet sind, die Redundanzsymbole ($\vec{A}_r$) in Abhängigkeit von den Datensymbolen ($\vec{A}_d$) so zu bestimmen, daß der genannte Abschnitt (1, 1', $\vec{a}_{uw}$) zunächst ein Nullwort bildet und dabei eine Kostenfunktion (F) minimiert wird, welche sich zumindest aus einem Maß ($F_1$) der Signalenergie der Redundanzsymbole ($\vec{A}_r$) zusammensetzt, und
   **daß** der OFDM-Kodierer dafür ausgebildet ist, anschließend auf das Nullwort ein davon verschiedenes Datenwort aufzuaddieren, um den genannten vorgegebenen Abschnitt (1, 1', $\vec{a}_{uw}$) fertigzustellen.

2. OFDM-Kodierer nach Anspruch 1, **dadurch gekennzeichnet, daß** jedes OFDM-Symbol ($S_i$, $\vec{a}$) zumindest zwei voneinander beabstandete vorgegebene Abschnitte (1, 1', $\vec{a}_{uw}$) hat, von denen zumindest einer (1) an einem Ende des OFDM-Symbols ($S_i$, $\vec{a}$) liegt.

3. OFDM-Kodierer nach Anspruch 1 oder 2, **dadurch gekennzeichnet, daß** die Anzahl der Subträger ($c_i$) des zweiten Teils (5) größer oder gleich der Anzahl der Abtastwerte des OFDM-Symbols ($S_i$, $\vec{a}$) im vorgegebenen Abschnitt (1, 1', $\vec{a}_{uw}$) ist.

4. OFDM-Kodierer nach Anspruch 1 oder 2, **dadurch gekennzeichnet, daß** die Anzahl der Subträger ($c_i$) des zweiten Teils (5) kleiner als die Anzahl der Abtastwerte des OFDM-Symbols ($S_i$, $\vec{a}$) im vorgegebenen Abschnitt (1, 1', $\vec{a}_{uw}$) ist.

5. OFDM-Kodierer nach einem der Ansprüche 1 bis 4, **dadurch gekennzeichnet**, die Kostenfunktion (F) sich aus dem genannten Maß ($F_1$) der Signalenergie der Redundanzsymbole ($\vec{A}_r$) und einem oder mehreren der folgenden Elemente zusammensetzt:

   - einem Maß ($F_2$) von Fehlern ($E_i$) der Abtastwerte des genannten Abschnitts (1, 1', $\vec{a}_{uw}$) gegenüber seinen Vorgabewerten;
   - einem Maß ($F_3$) von Abweichungen ($\Delta A_{dk}$) der Abtastwerte des ersten Teils (4) gegenüber den Werten des Datensymbols ($\vec{A}_d$) ;
   - einem Maß ($F_4$) von Abweichungen ($\Delta A_{qk}$) der Abtastwerte eines dritten Teiles (6) des Subträgersatzes ($\vec{C}$) gegenüber festen Vorgabewerten desselben.

6. OFDM-Kodierer nach einem der Ansprüche 1 bis 5, **dadurch gekennzeichnet, daß** die Subträger des zweiten Teils (5) im wesentlichen äquidistant über den gesamten Subträgersatz ($\vec{A}$) verteilt sind.

7. OFDM-Kodierer nach einem der Ansprüche 1 bis 6, **dadurch gekennzeichnet, daß** die Redundanzsymbole ($\vec{A}_r$) annähernd einem diskreten Wertegitter unter Minimierung der Abweichung ($F_5$) zu diesem entnommen sind.

8. Verfahren zur OFDM-Kodierung, bei welchem Datensymbole ($\vec{A}_d$) auf einen ersten Teil (4) und Redundanzsymbole ($\vec{A}_r$) auf einen zweiten Teil (5) eines Satzes ($\vec{C}$) von orthogonalen Subträgern ($c_i$) des Frequenzbereichs moduliert werden, die gemeinsam OFDM-Symbole ($S_i$, $\vec{a}$) im Zeitbereich bilden, wobei die Redundanzsymbole ($\vec{A}_r$) in Abhängigkeit von den Datensymbolen ($\vec{A}_d$) so bestimmt werden, daß jedes OFDM-Symbol ($S_i$, $\vec{a}$) zumindest einen von Null verschiedenen vorgegebenen Abschnitt (1, 1', $\vec{a}_{uw}$) hat, welcher an einem Ende des OFDM-Symbols ($S_i$, $\vec{a}$) liegt, **dadurch gekennzeichnet,**
   **daß** die Redundanzsymbole ($\vec{A}_r$) in Abhängigkeit von den Datensymbolen ($\vec{A}_d$) so bestimmt werden, daß der genannte Abschnitt (1, 1', $\vec{a}_{uw}$) zunächst ein Nullwort bildet und dabei eine Kostenfunktion (F) minimiert wird, welche sich zumindest aus einem Maß ($F_1$) der Signalenergie der Redundanzsymbole ($\vec{A}_r$) zusammensetzt, und
   **daß** anschließend auf das Nullwort ein davon verschiedenes Datenwort aufaddiert wird, um den genannten vorgegebenen Abschnitt (1, 1', $\vec{a}_{uw}$) fertigzustellen.

**9.** Verfahren zur OFDM-Kodierung nach Anspruch 8, **dadurch gekennzeichnet, daß** die Redundanzsymbole ($\vec{A}_r$) so bestimmt werden, daß jedes OFDM-Symbol ($S_i$, $\vec{a}$) zumindest zwei voneinander beabstandete vorgegebene Abschnitte (1, 1', $\vec{a}_{uw}$) hat, von denen zumindest einer an einem Ende des OFDM-Symbols ($S_i$, $\vec{a}$) liegt.

**10.** Verfahren nach Anspruch 8 oder 9, **dadurch gekennzeichnet, daß** die Anzahl der Subträger des zweiten Teils (5) größer oder gleich der Anzahl der Abtastwerte des OFDM-Symbols ($S_i$, $\vec{a}$) im vorgegebenen Abschnitt (1, 1', $\vec{a}_{uw}$) ist.

**11.** Verfahren nach Anspruch 8 oder 9, **dadurch gekennzeichnet, daß** die Anzahl der Subträger ($c_i$) des zweiten Teils (5) kleiner als die Anzahl der Abtastwerte des OFDM-Symbols ($S_i$, $\vec{a}$) im vorgegebenen Abschnitt (1, 1', $\vec{a}_{uw}$) ist.

**12.** Verfahren nach einem der Ansprüche 8 bis 11, **dadurch gekennzeichnet, daß** die Kostenfunktion (F) sich aus dem genannten Maß ($F_1$) der Signalenergie der Redundanzsymbole ($\vec{A}_r$) und einem oder mehreren der folgenden Elemente zusammensetzt:

- einem Maß ($F_2$) von Fehlern ($E_i$) der Abtastwerte des genannten Abschnitts (1, 1', $\vec{a}_{uw}$) gegenüber seinen Vorgabewerten;
- einem Maß ($F_3$) von Abweichungen ($\Delta A_{dk}$) der Abtastwerte des ersten Teils (4) gegenüber den Werten des Datensymbols ($\vec{A}_d$) ;
- einem Maß ($F_4$) von Abweichungen ($\Delta A_{qk}$) der Abtastwerte eines dritten Teiles (6) des Subträgersatzes ($\vec{C}$) gegenüber festen Vorgabewerten desselben.

**13.** Verfahren nach einem der Ansprüche 8 bis 12, **dadurch gekennzeichnet, daß** die Subträger der Redundanzsymbole ($\vec{A}_r$) im wesentlichen äquidistant über den gesamten Subträgersatz ($\vec{A}$) verteilt werden.

**14.** Verfahren nach einem der Ansprüche 8 bis 13, **dadurch gekennzeichnet, daß** die Redundanzsymbole ($\vec{A}_r$) annähernd einem diskreten Wertegitter unter Minimierung der Abweichungen ($F_5$) zu diesem entnommen werden.

**15.** OFDM-Signal, hergestellt mit einem OFDM-Kodierer nach einem der Ansprüche 1 bis 7 oder einem Verfahren nach einem der Ansprüche 8 bis 14.

**Claims**

**1.** OFDM encoder (2) with an IDFT element (3) for modulating data symbols ($\vec{A}_d$) onto a first part (4) and redundancy symbols ($\vec{A}_r$) onto a second part (5) of a set ($\vec{C}$) of orthogonal sub-carriers ($c_i$) in the frequency domain, which jointly form OFDM symbols ($S_i$, $\vec{a}$) in the time domain, and means (8) for determining the redundancy symbols ($\vec{A}_r$) as a function of the data symbols ($\vec{A}_d$) in such a manner that each OFDM symbol ($S_i$, $\vec{a}$) has at least one predetermined section (1, 1', $\vec{a}_{uw}$) differing from zero, which lies at an end of the OFDM symbol ($S_i$, $\vec{a}$), **characterised in that** the means (8) are configured to determine the redundancy symbols ($\vec{A}_r$) as a function of the data symbols ($\vec{A}_d$) so that the said section (1, 1', $\vec{a}_{uw}$) firstly forms a zero word and in doing so a cost function (F) is minimised, which is composed at least from a measure ($F_1$) of the signal energy of the redundancy symbols ($\vec{A}_r$), and that the OFDM encoder is configured to subsequently add to the zero word a data word differing therefrom in order to complete the said predetermined section (1, 1', $\vec{a}_{uw}$).

**2.** OFDM encoder according to claim 1, **characterised in that** each OFDM symbol ($S_i$, $\vec{a}$) has at least two predetermined sections (1, 1', $\vec{a}_{uw}$) spaced from one another, of which at least one (1) lies at an end of the OFDM symbol ($S_i$, $\vec{a}$).

**3.** OFDM encoder according to claim 1 or 2, **characterised in that** the number of sub-carriers ($c_i$) of the second part (5) is higher than or equal to the number of samples of the OFDM symbol ($S_i$, $\vec{a}$) in the predetermined section (1, 1', $\vec{a}_{uw}$).

**4.** OFDM encoder according to claim 1 or 2, **characterised in that** the number of sub-carriers ($c_i$) of the second part (5) is lower than the number of samples of the OFDM symbol, ($S_i$, $\vec{a}$) in the predetermined section (1, 1', $\vec{a}_{uw}$).

**5.** OFDM encoder according to one of claims 1 to 4, **characterised in that** the cost function (F) is composed of the said measure ($F_1$) of the signal energy of the redundancy symbols ($\vec{A}_r$) and one or more of the following elements:

• a measure ($F_2$) of errors ($E_i$) of the samples of the said section (1, 1', $\vec{a}_{uw}$) in relation to its predetermined values;

• a measure ($F_3$) of deviations ($\Delta A_{dk}$) of the samples of the first part (4) in relation to the values of the data symbol ($\vec{A}_d$);
• a measure ($F_4$) of deviations ($\Delta A_{qk}$) of the samples of a third part (6) of the sub-carrier set ($\vec{C}$) in relation to fixed predetermined values thereof.

6. OFDM encoder according to one of claims 1 to 5, **characterised in that** the sub-carriers of the second part (5) are distributed substantially equidistantly over the entire sub-carrier set ($\vec{A}$).

7. OFDM encoder according to one of claims 1 to 6, **characterised in that** the redundancy symbols ($\vec{A}_r$) are taken approximately from a discrete value grid with minimisation of the deviation ($F_5$) therefrom.

8. Method for OFDM encoding, in which data symbols ($\vec{A}_d$) are modulated onto a first part (4) and redundancy symbols ($\vec{A}_r$) are modulated onto a second part (5) of a set ($\vec{C}$) of orthogonal sub-carriers ($c_i$) in the frequency domain, which jointly form OFDM symbols ($S_i$, $\vec{a}$) in the time domain, wherein the redundancy symbols ($\vec{A}_r$) are determined as a function of the data symbols ($\vec{A}_d$) in such a manner that each OFDM symbol ($S_i$, $\vec{a}$) has at least one predetermined section (1, 1', $\vec{a}_{uw}$) differing from zero, which lies at an end of the OFDM symbol ($S_i$, $\vec{a}$), **characterised in that** the redundancy symbols ($\vec{A}_r$) are determined as a function of the data symbols ($\vec{A}_d$) in such a manner that the said section (1, 1', $\vec{a}_{uw}$) firstly forms a zero word and in doing so a cost function ($F$) is minimised, which is composed at least from a measure ($F_1$) of the signal energy of the redundancy symbols ($\vec{A}_r$), and that a data word differing from the zero word is subsequently added thereto in order to complete the said predetermined section (1, 1', $\vec{a}_{uw}$).

9. Method for OFDM encoding according to claim 8, **characterised in that** the redundancy symbols ($\vec{A}_r$) are determined in such a manner that each OFDM symbol ($S_i$, $\vec{a}$) has at least two predetermined sections (1, 1', $\vec{a}_{uw}$) spaced from one another, of which at least one lies at an end of the OFDM symbol ($S_i$, $\vec{a}$).

10. Method according to claim 8 or 9, **characterised in that** the number of sub-carriers of the second part (5) is higher than or equal to the number of samples of the OFDM symbol ($S_i$, $\vec{a}$) in the predetermined section (1, 1', $\vec{a}_{uw}$).

11. Method according to claim 8 or 9, **characterised in that** the number of sub-carriers ($c_i$) of the second part (5) is lower than the number of samples of the OFDM symbol ($S_i$, $\vec{a}$) in the predetermined section (1, 1', $\vec{a}_{uw}$).

12. Method according to one of claims 8 to 11, **characterised in that** the cost function (F) is composed of the said measure ($F_1$) of the signal energy of the redundancy symbols ($\vec{A}_r$) and one or more of the following elements:

• a measure ($F_2$) of errors ($E_i$) of the samples of the said section (1, 1', $\vec{a}_{uw}$) in relation to its predetermined values;
• a measure ($F_3$) of deviations ($\Delta A_{dk}$) of the samples of the first part (4) in relation to the values of the data symbol ($\vec{A}_d$);
• a measure ($F_4$) of deviations ($\Delta A_{qk}$) of the samples of a third part (6) of the sub-carrier set ($\vec{C}$) in relation to fixed predetermined values thereof.

13. Method according to one of claims 8 to 12, **characterised in that** the sub-carriers of the redundancy symbols ($\vec{A}_r$) are distributed substantially equidistantly over the entire sub-carrier set ($\vec{A}$).

14. Method according to one of claims 8 to 13, **characterised in that** the redundancy symbols ($\vec{A}_r$) are taken approximately from a discrete value grid with minimisation of the deviations ($F_5$) therefrom.

15. OFDM signal produced with an OFDM encoder according to one of claims 1 to 7 or a method according to one of claims 8 to 14.

**Revendications**

1. Codeur OFDM (2), avec un membre TFDI (3) pour la modulation de symboles de données ($\vec{A}_d$) sur une première portion (4) et de symboles de redondance ($\vec{A}_r$) sur une deuxième portion (5) d'un set ($\vec{C}$) de sous-porteuses orthogonales ($c_i$) dans le domaine fréquentiel, qui forment ensemble les symboles OFDM ($S_i$, $\vec{a}$) dans le domaine temporel, et des moyens (8) pour la détermination des symboles de redondance ($\vec{A}_r$) en fonction des symboles de données ($\vec{A}_d$) de telle sorte que chaque symbole OFDM ($S_i$, $\vec{a}$) a au moins un segment prédéfini (1, 1', $\vec{a}_{uw}$) différent de zéro, qui est posé à une extrémité du symbole ($S_i$, $\vec{a}$), **caractérisé en ce que** les moyens (8) sont formés pour déterminer les symboles de redondance ($\vec{A}_r$) en fonction des symboles de données ($\vec{A}_d$) de telle sorte que ledit segment (1, 1', $\vec{a}_{uw}$) forme d'abord un mot nul et y une fonction de coût (F) est minimisée, qui se compose au moins d'une mesure (F$_1$) de l'énergie de signal des symboles de redondance ($\vec{A}_r$), et
**en ce que** le codeur OFDM est formé pour ensuite additionner au mot nul un mot de données qui en est différent, afin de compléter ledit segment prédéfini (1, 1', $\vec{a}_{uw}$).

2. Codeur OFDM selon la revendication 1, **caractérisé en ce que** chaque symbole OFDM ($S_i$, $\vec{a}$) a au moins deux segments prédéfinis (1, 1', $\vec{a}_{uw}$) distants entre eux, dont au moins un (1) est placé à une extrémité du symbole OFDM ($S_i$, $\vec{a}$).

3. Codeur OFDM selon la revendication 1 ou 2, **caractérisé en ce que** le nombre des sous-porteuses ($c_i$) de la deuxième portion (5) est supérieur ou égal au nombre des valeurs d'échantillonnage du symbole OFDM ($S_i$, $\vec{a}$) dans le segment prédéfini (1, 1', $\vec{a}_{uw}$).

4. Codeur OFDM selon la revendication 1 ou 2, **caractérisé en ce que** le nombre des sous-porteuses ($c_i$) de la deuxième portion (5) est inférieur au nombre des valeurs d'échantillonnage du symbole OFDM ($S_i$, $\vec{a}$) dans le segment prédéfini (1, 1', $\vec{a}_{uw}$).

5. Codeur OFDM selon l'une quelconque des revendications 1 à 4, **caractérisé en ce que** la fonction de coût (F) se compose de ladite mesure (F$_1$) de l'énergie de signal des symboles de redondance ($\vec{A}_r$) et d'un ou de plusieurs des éléments suivants :

   - une mesure (F$_2$) des erreurs (E$_i$) des valeurs d'échantillonnage dudit segment (1, 1', $\vec{a}_{uw}$) en face de ses valeurs prédéfinis ;
   - une mesure (F$_3$) des écarts ($\Delta A_{d_k}$) des valeurs d'échantillonnage de la première portion (4) en face des valeurs du symbole de données ($\vec{A}_d$);
   - une mesure (F$_4$) des écarts ($\Delta A_{q_k}$) des valeurs d'échantillonnage d'une troisième portion (6) du set de sous-porteuses ($\vec{C}$) en face des valeurs prédéfinies fixes de la même.

6. Codeur OFDM selon l'une quelconque des revendications 1 à 5, **caractérisé en ce que** les sous-porteuses de la deuxième portion (5) sont pour l'essentiel distribuées de manière équidistante sur la totalité du set des sous-porteuses ($\vec{A}$).

7. Codeur OFDM selon l'une quelconque des revendications 1 à 6, **caractérisé en ce que** les symboles de redondance ($\vec{A}_r$) sont prélevés approximativement sur une grille discrète de valeurs pendant la minimisation de l'écart (F$_5$) par rapport à celle-ci.

8. Procédé pour le codage OFDM, dans lequel sont modulés des symboles de données ($\vec{A}_d$) sur une première portion (4) et des symboles de redondance ($\vec{A}_r$) sur une deuxième portion (5) d'un set ($\vec{C}$) de sous-porteuses orthogonales ($c_i$) du domaine fréquentiel, qui ensemble forment des symboles OFDM ($S_i$, $\vec{a}$) dans le domaine temporel, les symboles de redondance ($\vec{A}_r$) étant déterminés en fonction des symboles de données ($\vec{A}_d$) de telle sorte que chaque symbole OFDM ($S_i$, $\vec{a}$) a au moins un segment prédéfini (1, 1', $\vec{a}_{uw}$) différent de zéro, qui est posé à une extrémité du symbole OFDM ($S_i$, $\vec{a}$), **caractérisé en ce que** les symboles de redondance ($\vec{A}_r$) sont déterminés en fonction des symboles de données ($\vec{A}_d$) de telle sorte que ledit segment (1, 1', $\vec{a}_{uw}$) forme d'abord un mot nul et y une fonction de coût (F) est minimisée, qui se compose au moins d'une mesure (F$_1$) de l'énergie de signal des symboles de redondance ($\vec{A}_r$), et
en ce que ensuite au mot nul un mot de donnés qui en est différent est additionné, afin de compléter ledit segment prédéfini (1, 1', $\vec{a}_{uw}$).

9. Procédé pour le codage OFDM selon la revendication 8, **caractérisé en ce que** les symboles de redondance ($\vec{A}_r$) sont déterminés de telle sorte que chaque symbole OFDM ($S_i$, $\vec{a}$) a au moins deux segments prédéfinis (1, 1', $\vec{a}_{uw}$) distants entre eux, dont au moins un est placé à une extrémité du symbole OFDM ($S_i$, $\vec{a}$).

10. Procédé selon la revendication 8 ou 9, **caractérisé en ce que** le nombre des sous-porteuses de la deuxième portion (5) est supérieur ou égal au nombre des valeurs d'échantillonnage du symbole OFDM ($S_i$, $\vec{a}$) dans le segment prédéfini (1, 1', $\vec{a}_{uw}$).

11. Procédé selon la revendication 8 ou 9, **caractérisé en ce que** le nombre des sous-porteuses ($c_i$) de la deuxième

portion (5) est inférieur au nombre des valeurs d'échantillonnage du symbole OFDM ($S_i$, $\vec{a}$) dans le segment prédéfini (1, 1', $\vec{a}_{uw}$).

12. Procédé selon l'une quelconque des revendications 8 à 11, **caractérisé en ce que** la fonction de coût (F) se compose de ladite mesure ($F_1$) de l'énergie de signal des symboles de redondance ($\vec{A}_r$) et d'un ou de plusieurs des éléments suivants :

   - une mesure ($F_2$) des erreurs ($E_1$) des valeurs d'échantillonnage dudit segment (1, 1', $\vec{a}_{uw}$) en face de ses valeurs prédéfinis ;
   - une mesure ($F_3$) des écarts ($\Delta A_{d_k}$) des valeurs d'échantillonnage de la première portion (4) en face des valeurs du symbole de données ($\vec{A}_d$) ;
   - une mesure ($F_4$) des écarts ($\Delta A_{q_k}$) des valeurs d'échantillonnage d'une troisième portion (6) du set de sous-porteuses ($\vec{C}$) en face des valeurs prédéfinies fixes de la même.

13. Procédé selon l'une quelconque des revendications 8 à 12, **caractérisé en ce que** les sous-porteuses des symboles de redondance ($\vec{A}_r$) sont pour l'essentiel distribuées de manière équidistante sur la totalité du set de sous-porteuses ($\vec{A}$).

14. Procédé selon l'une quelconque des revendications 8 à 13, **caractérisé en ce que** les symboles de redondance ($\vec{A}_r$) sont prélevés approximativement sur une grille discrète de valeurs pendant la minimisation des écarts ($F_5$) par rapport à celle-ci.

15. Signal OFDM, produit avec un codeur OFDM selon l'une quelconque des revendications 1 à 7 ou un procédé selon l'une quelconque des revendications 8 à 14.

| S₁ | ZP | S₂ | ZP | S₃ |

$T_{DFT}$  $T_{GI}$

$T_S$

# Fig. 1
### (St.d.T.)

| S₁ | CP₂ | S₂ | CP₂ | CP₃ | S₃ |

$T_{GI}$  $T_{DFT}$

$T_S$

# Fig. 2
### (St.d.T.)

1

| S₁ | UW | S₂ | UW | S₃ |

$T_{DFT} = T_S$

# Fig. 3

**Fig. 4**

**Fig. 5**

**EP 2 337 293 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006018250 A1

- EP 1564952 A2

**In der Beschreibung aufgeführte Nicht-Patentliteratur**

- **B. MUQUET et al.** Cyclic-Prefixing or Zero-Padding for Wireless Multicarrier Transmissions?. *IEEE Transaction on Communications,* Dezember 2002, vol. 50 (12

- **STEVEN M. KAY.** Fundamentals of Statistical Signal Processing, Vol. 1: Estimation Theory. Prentice Hall, 1993, vol. 1, 391